Europäisches Patentamt

(19) European Patent Office

Office européen des brevets

(11) Veröffentlichungsnummer: **0 010 632**
**B1**

(12) **EUROPÄISCHE PATENTSCHRIFT**

(45) Veröffentlichungstag der Patentschrift:
24.03.82

(51) Int. Cl.³: **B 29 D 7/22**

(21) Anmeldenummer: **79103762.5**

(22) Anmeldetag: **03.10.79**

(54) **Verfahren zur Oberflächenbehandlung von Kunststoffen und nach diesem Verfahren hergestellte Folie.**

(30) Priorität: **05.10.78 JP 123013/78**

(43) Veröffentlichungstag der Anmeldung:
**14.05.80 Patentblatt 80/10**

(45) Bekanntmachung des Hinweises auf die Patenterteilung:
**24.03.82 Patentblatt 82/12**

(84) Benannte Vertragsstaaten:
**BE DE FR GB IT LU NL**

(56) Entgegenhaltungen:
**DE-B-1 769 534**
**DE-Bz-1 769 872**
**US-A-3 274 089**
**US-A-3 275 540**
**US-A-3 284 331**
**US-A-3 296 011**

(73) Patentinhaber: **TORAY INDUSTRIES, INC., 2,**
**Nihonbashi-Muromachi 2-chome Chuo-ku, Tokyo 103 (JP)**

(72) Erfinder: **Deguchi, Yukichi, 2-13-1 Sonoyama, Otsu-shi,**
**Shiga-ken (JP)**
Erfinder: **Yamagishi, Hideki, 2-10 Sonoyama, Otsu-shi,**
**Shiga-ken (JP)**
Erfinder: **Kirimura, Shun-ichiro, 2-4-22 Beppo, Otsu-shi,**
**Shiga-ken (JP)**

(74) Vertreter: **Wettlauffer, Willy, Dr. et al, Kalle Niederlassung**
**der Hoechst AG Rheingaustrasse 190 Postfach 3540,**
**D-6200 Wiesbaden 1 (DE)**

Verfahren zur Oberflächenbehandlung von Kunststoffen und nach diesem Verfahren hergestellte Folie

Vorliegende Erfindung betrifft ein Verfahren zur Oberflächenbehandlung von geformten Kunststoffen, insbesondere Kunststoffolien.

Für viele Anwendungszwecke werden Kunststoffolien vor ihrer endgültigen Verwendung durch Beschichten, Bedrucken, Metallisieren oder Kaschieren bearbeitet. Die meisten Kunststoffe besitzen jedoch ein so schlechtes Haftvermögen, dass eine Behandlung zur Verbesserung ihres Haftvermögens unumgänglich ist. Zum Beispiel ist es wünschenswert, dass Kunststoffolien für Verpackungszwecke mit Druckfarben vom Cellulosenitrattyp (sogenannte Zellglasfarben) bedruck werden können, die den Vorteil des schnellen Druckens ohne zurückbleibendes Lösungsmittel aufweisen. Das Haftvermögen der meisten Kunststoffolien ist jedoch ungenügend für diese Art von Druckfarben.

Deshalb sind schon Methoden verschiedener Art, wie eine Entladungsbehandlung, chemische Behandlung und Flammbehandlung vorgeschlagen worden, um das Haftvermögen der Kunststoffe durch Aktivierung ihrer Oberflächen zu verbessern. Vor allem ist es bekannt, dass eine Koronabehandlung in einer weitgehend sauerstofffreien, stickstoffhaltigen Atmosphäre (im weiteren als NCD-Behandlung bezeichnet) das Haftvermögen hervorragend verbessert, und das Verfahren ist einfach und sehr rationell durchzuführen. Diese NCD-Behandlung ist besonders wirksam zur Verbesserung des Haftvermögens für Bindemittel vom Cellulosenitrattyp, und die meisten Arten Kunststoffolien, wie z.B. solche aus Polypropylen und Polyester, lassen sich nach der NCD-Behandlung unter Verwendung der Zellglasdruckfarben bedrucken. Unter diesem Gesichtspunkt stellt die NCD-Behandlung ein sehr wirksames und rationelles Oberflächenbehandlungsverfahren dar.

Die Anwendung der NCD-Behandlung ist jedoch wegen der folgenden Mängel eingeschränkt. Eine nach dem NCD-Verfahren behandelte Kunststoffoberfläche neigt dazu, sich durch Reibung an einem elektrisch geerdeten Metall aufzuladen. Aus diesem Grund besitzen Kunststoffe einen ausserordentlich hohen scheinbaren Reibungsbeiwert an einer elektrisch geerdeten Metalloberfläche.

Diese Eigenschaft führt nicht nur zu Störungen durch Faltenbildung und Kratzer, die durch schlechte Gleitung zwischen den Folien und den metallischen Umlenkrollen auf der Folienherstellungs- oder Verarbeitungsstrasse hervorgerufen werden, sondern bringt bei der Verarbeitung häufig durch die Reibung zwischen den Folien und den metallischen Teilen auch ein Zufuhrproblem mit sich, wie z.B. im Fall von Verpackungsautomaten.

Diese Störungen werden zwar durch Zusatz von Antistatika zu den Kunststoffen verringert, jedoch sind die Mängel zum Teil solcher Art, dass es für gewisse Kunststofftypen keine zufriedenstellenden Antistatika gibt und das Haftvermögen der Kunststoffoberflächen wegen des Druchdringens unzureichender Antistatika verschlechtert wird. Insbesondere bei Metallaufdampfverfahren führt der Zusatz von Antistatika zu schwerwiegenden Haftungsproblemen.

Die dieser Erfindung zugrundeliegende Aufgabe besteht darin, ein Verfahren zur Oberflächenbehandlung zu schaffen, welches die oben erwähnten Nachteile nicht besitzt und eine der NCD-Behandlung überlegene Wirksamkeit bei der Verbesserung des Haftvermögens aufweist.

Die der Erfindung zugrundeliegende Aufgabe wird gelöst durch ein Verfahren zur Oberflächenbehandlung von Kunststoffen mittels einer Koronaentladung, dessen kennzeichnendes Merkmal darin besteht, dass man die Koronaentladung in einer Gasatmosphäre durchführt, die durch ein Gasgemisch aus Stickstoff ($N_2$) und Kohlendioxyd ($CO_2$) gebildet wird, wobei das Volumenverhältnis von $N_2 : CO_2$ bei 99,5 : 0,5 bis 50 : 50 liegt und der Sauerstoffgehalt des Gasgemisches höchstens 0,1 Volumenprozent beträgt.

Die nach dem erfindungsgemässen Verfahren behandelten Kunststoffe besitzen die folgenden Vorteile:

1) Sie weisen nur eine sehr geringfügige Änderung in den mechanischen bzw. optischen Eigenschaften auf, da die durch die Behandlung modifizierte Oberflächenschicht äusserst dünn ist (üblicherweise 20 nm oder weniger).
2) Sie zeigen ausgezeichnetes Haftvermögen für verschiedene Arten Druckfarben, einschliesslich Zellglasdruckfarben.
3) Sie weisen gute Gleitung an elektrisch geerdetem Metall auf, da keine statische Aufladung durch Reibung mit solchen Metallen erfolgt.

Zudem ist es äusserst überraschend, dass sie der NCD-Behandlung eindrucksvoll überlegene Eigenschaften aufweisen, nämlich:

4) Sie besitzen ausgezeichnetes Haftvermögen für aufgedampftes Metall.
5) Sie lassen sich nicht nur mit gewöhnlichen Lösungsmitteldruckfarben, sondern wegen ihrer stark hydrophilen Oberflächen auch mit wasserlöslichen Druckfarben bedrucken.

Die Auswahl an Kunststoffen, die dem erfindungsgemässen Verfahren unterworfen werden können, ist praktisch unbegrenzt. Das Verfahren weist bei Kunststoffen aus einem weiten Bereich, von unpolaren Polyolefinen bis zu stark polaren Polyamiden, eine äusserst hohe Wirksamkeit auf.

Als repräsentative Kunststoffe seien Polyäthylen, Polypropylen, Polyester, Polyvinylchlorid, Polyvinylidenchlorid, Polyamid und dergleichen genannt.

Obwohl die Gestalt der Objekte für dieses Verfahren keiner Begrenzung unterliegt, ist es am besten auf Folien oder Filme anwendbar. Beim Einsatz bei Filmen ist das Verfahren auf Filme in jeglichem Orientierungszustand anwendbar, wie uniaxial orientierten Film, biaxial orientiertem Film und dergleichen.

Das erfindungsgemässe Verfahren lässt sich noch wirksamer durchführen, wenn man es in das Filmherstellungsverfahren eingliedert.

Unter der in dieser Erfindung beschriebenen Koronaentladungsbehandlung versteht man ein Oberflächenbehandlungsverfahren, wobei das Behandlungsobjekt einer Korona unterworfen wird, welche durch Anlegen einer Hochspannung zwischen einem Elektrodenpaar in der Gasatmosphäre unter einem Druck von etwa 100 Torr bis etwa 3 Atmosphären erzeugt wird.

Im Fall der Behandlung eines Filmes ist eine der Elektroden des Paares zweckmässig eine Metallwalze, und der Film wird auf der ihn führenden Walze behandelt. Im Fall eines dünnen Filmes ist ferner die Oberfläche dieser Walzenelektrode zweckmässig mit einem Dielektrikum beschichtet.

Für die andere Seite des Elektrodenpaares ist jegliche Gestalt, wie Nadel-, Stangen-, Draht- bzw. Blattelektrode einsetzbar.

Für die zwischen einem Elektrodenpaar anzulegende Spannung kann man Gleichstrom oder einen Wechselstrom beliebiger Wellenform bzw. einen Wechselstrom mit einer beliebigen, einem Gleichstrom überlagerten Wellenform anwenden. Sinuswellen, Dreieckswellen, Rechteckswellen, Sägezahnwellen oder Impulswellen mit einer Wellenamplitude von 2 kV bis 30 kV (Erde bis Peak) und einer Frequenz von 50 Hz bis 500 kHz sind im Hinblick auf die Wirksamkeit der Behandlung besonders geeignet.

Zweckmässig liegt die einem Elektrodenpaar zuzuführende elektrische Energie im allgemeinen im Bereich von 500 bis 30000 J/m² Objektfläche, doch hängt der Wert vom Objekt und seinen erforderlichen Eigenschaften ab. Eine niedrigere als die oben bezeichnete Energiezufuhr ergibt eine kaum wirksame Behandlung, und eine höhere vermindert das Haftvermögen, da ein Abbau der durch diese Behandlung modifizierten Oberflächenschicht eintritt.

Die Koronaentladungsbehandlung wird gemäss dieser Erfindung in einer aus Stickstoff ($N_2$) und Kohlendioxyd ($CO_2$) bestehenden Mischgasatmosphäre durchgeführt. Das Volumenmischungsverhältnis $N_2$ zu $CO_2$ soll im Bereich von 99,5 : 0,5 bis 50 : 50 liegen. Im Hinblick auf die Wirksamkeit der Behandlung liegt dieses Verhältnis vorzugsweise im Bereich von 99,2 : 0,8 bis 80 : 20. Ein niedrigerer als der oben bezeichnete Volumenanteil an $CO_2$ führt zu den Nachteilen der sogenannten NCD-Behandlung, und ein höherer ergibt einen Abfall in der Einwirkung auf das Haftvermögen für Zellglasdruckfarben, was ja einen der Vorteile dieser Erfindung darstellt.

Die Sauerstoffkonzentration in der erfindungsgemässen Behandlungsatmosphäre muss unter 0,1 Vol.% liegen. Eine Konzentration unter 0,05 Vol.% ist im Hinblick auf das Fortdauern der dem Objekt durch die Behandlung verliehenen Eigenschaften vorzuziehen. Eine höhere Sauerstoffkonzentration als 0,1 Vol.% führt nur zu einer sehr geringfügigen Verbesserung des Haftvermögens, da die durch die Koronaentladung erzeugten Sauerstoffradikale schnell und vorzugsweise auf der Objektoberfläche reagieren und deshalb ein schneller Abbau der Oberflächenschicht eintritt. Kleine Mengen an von Sauerstoff verschiedenen Gasen, beispielsweise Kohlenmonoxyd oder Gasen wie Argon und Wasserstoff, sind zulässig, solange sich die Ergebnisse gemäss der vorliegenden Erfindung nicht verschlechtern.

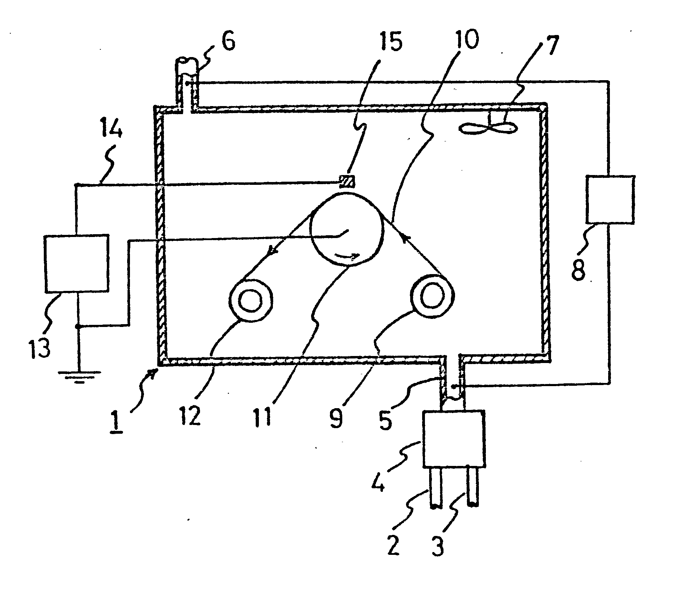

Nachstehend wird als Beispiel eine in der Figur dargestellte Vorrichtung für das erfindungsgemässe Verfahren erläutert.

Die Kammer 1 in der Figur dient dazu, das Eindringen von Luft zu verhindern. Stickstoff aus dem Einlass 2 und Kohlendioxyd aus dem Einlass 3 werden gemessen und durch den Mischer 4 im jeweiligen Verhältnis vermischt. Das Gemisch wird durch den Gaseinlass 5 gefördert und durch den Gasauslass 6 abgezogen. Der eingebaute Propeller 7 dient der Vereinheitlichung der Zusammensetzung der Kammeratmosphäre. Die Mischgaszufuhr muss so dosiert werden, dass die durch den Sauerstoffanalysator 8 gemessene Restsauerstoffkonzentration unter 0,1 Vol.% bleibt.

Der von der Abwickelrolle 9 abgezogene Film 10 wird auf der Behandlungswalze (Walzenelektrode) 11 der erfindungsgemässen Behandlung unterworfen und auf der Aufnahmerolle 12 aufgewickelt. Die Behandlungswalze 11 ist elektrisch geerdet, und ihre Oberfläche ist mit einem Dielektrikum beschichtet. Die durch den Generator 13 erzeugte und geregelte Spannung wird über das Hochspannungskabel 14 an die Gegenelektrode 15 angelegt. Die Koronaentladung wird im Zwischenraum zwischen der Gegenelektrode und der Filmoberfläche auf der Behandlungswalze erzeugt.

Im folgenden wird die vorliegende Erfindung anhand einiger Filmauswertungsmethoden und einiger Beispiele näher erläutert.

### Beurteilung der Bedruckbarkeit Eine Zellglasdruckfarbe (CC-ST-weiss der Toyo Inc Co.) wird mittels Rollrakeln oder Tiefdruckauftragswalzen so auf die Filmoberfläche gedruckt, dass sich eine Druckschicht einer Stärke von 3 g/m² bildet. Der so bedruckte Film wird 1 min bei 60°C getrocknet.

Nach 24 h Alterung bei Raumtemperatur und -feuchte wird eine Abblätterungsprüfung mit Klebestreifen auf Zellglasbasis (Cellotape der Nichiban Co.) durchgeführt.

Die Beurteilungsstufen sind wie folgt:

5) Keine Abblätterung der gedruckten Farbschicht; ausgezeichnete Haftung.
4) Über 90% der Farbschichtfläche bleibt zurück; gute Haftung.
3) 75% bis 90% der Farbschichtfläche bleibt zurück; ziemlich gute Haftung.
2) 50% bis 75% der Farbschichtfläche bleibt zurück; mangelnde Haftung.
1) Unter 50% der Farbschichtfläche bleibt zurück; schlechte Haftung.

## Messung der kritischen Oberflächenbenetzungsspannung $\gamma_c$

Diese wird nach einer auf JIS K-6768 beruhenden Methode gemessen. Drei Standardlösungen, die unten angeführt sind und jeweils dem Mass der Benetzungsspannung entsprechen, werden nacheinander angewandt.

30 dyn/cm $\leqslant$ $\gamma_c$ $\leqslant$ 56: JIS K-6768-Standardlösung

56 dyn/cm $<$ $\gamma_c$ $\leqslant$ 72: wässrige Ammoniaklösung

72 dyn/cm $<$ $\gamma_c$ $\leqslant$ 86: wässrige Natronlauge

## Beurteilung der Haftung an aufgedampftem Aluminium (Metallisierbarkeit)

Unter Verwendung eines Vakuummetallisators vom Glasglockentyp (Modell EBH-6 der Nippon Vaccum Technique Co.) wird Aluminium bei einem Druck von etwa $1 \times 10^{-5}$ Torr so auf die Filmoberfläche aufgedampft, dass sich eine metallische Schicht in einer Stärke von etwa 60 nm bildet.

Anschliessend wird die Abblätterungsprüfung mittels Klebstreifen auf Zellglasbasis durchgeführt. Die Beurteilungsstufen sind die selben wie bei der Bedruckbarkeit beschrieben.

### Messung der Gleitfähigkeit eines Films auf geerdeter metallischer Oberfläche

Die dynamische Reibungskraft eines Films gegen Aluminiumblech wird mittels eines Gleitungsprüfers (Slip Tester der Toyo Tester Ind. Co.) gemessen.

Diese dynamische Reibungskraft ist im allgemeinen während der Reibungsbewegung konstant. Bei einem durch Reibung gegen eine metallische Oberfläche leicht aufladbaren Film, wie einem NCD-behandelten Film, zeigt diese dynamische Reibungskraft jedoch einen Anstieg mit der Reibungsbewegung. Auf der Filmoberfläche wird nämlich durch die Reibung eine elektrische Ladung erzeugt, und der Film wird durch die von dieser elektrischen Ladung herrührenden Coulomb-Kraft gegen das Aluminiumblech gedrückt. Dies führt zu einem Anstieg des scheinbaren dynamischen Reibungsbeiwertes, der als der Quotient aus Reibungskraft und Gewichtsbetrag definiert ist.

Der Reibungsbeiwert gegen Metall $\mu$ ist durch folgende Gleichung definiert:

$$\mu\text{met} = F(150)/W$$

worin $F(150)$ die Reibungskraft an dem Punkt, wo das Aluminiumblech des Gleitungsprüfers eine Strecke von 150 mm durchlaufen hat, und W den Betrag des statischen Gewichts bedeuten.

Die Messbedingungen sind wie folgt:
Bewegungsgeschwindigkeit des Aluminiumblechs: 600 mm/min Betrag des statischen Gewichts (W): 500 g

### Beispiel 1:

Als zu behandelnder Film wird ein nach der übliche Spannrahmenmethode erzeugter, isotaktischer Polypropylenfilm (Torayfan BO T2500 der Toray Ind. Inc.) eingesetzt.

Zum Vergleich mit der erfindungsgemässen Behandlung wurde eine NCD-Behandlung und Koronabehandlung in einer Luftatmosphäre durchgeführt (im weiteren als ACD-Behandlung bezeichnet).

### A. Erfindungsgemässe Behandlung:

Diese wurde unter den folgenden Bedingungen ausgeführt:

| | |
|---|---|
| Apparatur: | wie in Fig. 1 abgebildet |
| Gaszusammensetzung in der Kammer: | Stickstoff 90 Vol.% Kohlendioxyd 10 Vol.% Restsauerstoff 0,01 Vol.% rel. Feuchte unter 0,03% |
| Zwischenraum zwischen der Gegenelektrode und der Filmoberfläche: | 1,0 mm |
| Filmlaufgeschwindigkeit: | 100 m/min |
| Generator: | Modell HF-401 der Kasuga Electric Co. (Höchstleistung 4 kW, Frequenz 110 kHz, Sinuswelle) |
| Zugeführte elektrische Energie: | 3600 J/m² |

### B. NCD-Behandlung:

Diese wurde mit Ausnahme der Gaszusammensetzung in der Kammer unter den gleichen Bedingungen wie in A ausgeführt. Die Gaszusammensetzung ist wie folgt:

| | |
|---|---|
| Gas: | Reinstickstoff |
| Restsauerstoffgehalt: | 0,01 Vol.% |
| rel. Feuchte: | unter 0,03% |

### C. Koronabehandlung in einer Luftatmosphäre (ACD-Behandlung):

Die Bedingungen sind wie folgt:

| | |
|---|---|
| Apparatur: | Mehrzweckoberflächenbehandlungsapparat Modell FE-X2 der Toray Ind. Inc. |
| Gestalt der Elektrode: | Stange |
| Zwischenraum: | 1,0 mm |
| Filmlaufgeschwindigkeit: | 100 m/min |
| Generator: | Modell HF-401 der Kasuga Electric Co. |
| Zugeführt elektrische Energie: | 3600 J/m² |

Die Ergebnisse der Beurteilung des so erhaltenen Films sind in Tabelle 1 angegeben.

Sowohl die Bedruckbarkeit als auch die Metallisierbarkeit des ACD-behandelten Films sind schlecht.

Der NCD-behandlte Film weist zwar ausgezeichnete Bedruckbarkeit und Metallisierbarkeit auf, doch ist seine Gleitfähigkeit auf geerdetem Metall schlecht.

Dagegen besitzt der nach dem erfindungsgemässen Verfahren behandelte Film ausgezeichnete Gleitfähigkeit auf geerdetem Metall sowie Bedruckbarkeit und Metallisierbarkeit. Dieses Verfahren zeigt keinen der der NCD-Behandlung innewohnden Mängel und verleiht zudem der Filmoberfläche eine ausserordentlich hohe kritische Oberflächen benetzungsspannung.

## Beispiel 2

Als zu behandelnder Film wurde derselbe Polypropylenfilm wie in Beispiel 1 verwendet.

Erfindungsgemässe Oberflächenbehandlungen wurden in den in Tabelle 2 angegebenen Atmosphären durchgeführt. (Die übrigen Bedingungen sind wie in Beispiel 1 A.)

Die Ergebnisse der Beurteilung der so erhaltenen Filme sind in Tabelle 2 angeführt.

## Beispiel 3

Als zu behandelnder Film wurde derselbe Polypropylenfilm wie in Beispiel 1 verwendet.

Erfindungsgemässe Oberflächenbehandlungen werden in Atmosphären mit dem in Tabelle 3 angegebenen Sauerstoffgehalt durchgeführt. (Die übrigen Bedingungen sind wie in Beispiel 1 A.)

Zum Vergleich erfolgt eine ähnliche Behandlung in einer Atmosphäre mit höherem Sauerstoffgehalt.

Die Ergebnisse der Beurteilung des so erhaltenen Films sind in Tabelle 3 angeführt.

Tabelle 1

| Film-bezeichnung | Behandlung | Bedruck-barkeit | Metallisier-barkeit | Krit. Ober-flächen-benetzungs-spannung (dyn/cm) | Reibungswert gegen Metall $\mu$met |
|---|---|---|---|---|---|
| A-1 | erfindungsgem. Verfahren | 5 | 5 | 70 | 0,52 |
| B | NCD-Behandlung | 5 | 4 | 48 | 3,1 |
| C | ACD-Behandlung | 1 | 3 | 41 | 0,54 |

Tabelle 2

| Film-bezeichnung | Mischungsverhältnis im zugeführten Gas $N_2 : CO_2$ (Volumenverhältnis) | Bedruck-barkeit | Metallisier-barkeit | Krit. Oberflächen-benetzungs-spannung (dyn/cm) | $\mu$met |
|---|---|---|---|---|---|
| A-2 | 99,2 : 0,8 | 5 | 5 | 56 | 0,70 |
| A-3 | 97 : 3 | 5 | 5 | 68 | 0,52 |
| A-4 | 80 : 20 | 5 | 5 | 72 | 0,51 |
| A-5 | 55 : 45 | 4~5 | 5 | 72 | 0,52 |

Tabelle 3

| Filmbezeichnung | Restsauerstoff-gehalt (Vol.%) | Bedruck-barkeit (1)[a] | Bedruck-barkeit (2)[b] | Bemerkungen |
|---|---|---|---|---|
| A-6 | 0,005 | 5 | 5 | erfindungsgem. Verfahren |
| A-7 | 0,02 | 5 | 5 | erfindungsgem. Verfahren |
| A-8 | 0,05 | 5 | 5 | erfindungsgem. Verfahren |
| A-9 | 0,10 | 5 | 4~5 | erfindungsgem. Verfahren |
| D-1 | 0,30 | 3 | 1 | Vergleich |

[a] sofort nach der Behandlung beurteilt
[b] nach 6 Monaten Alterung beurteilt

**Beispiel 4:**

Die fünf unten beschriebene Filmtypen wurden eingesetzt.

a) Biaxial gereckter Polyesterfilm (Polyäthylenterephthalat, 12 μm stark) (Lumirror P11 der Toray Ind. Inc.)
b) Biaxial gereckter Polyamidfilm, 20 μm stark (Emblem der Unichica Ind. Co.)
c) Ungereckter Äthylen/propylenmischpolymerfilm, 24 μm stark (Torayfan NO der Toray Ind. Inc.)

d) Biaxial gereckter, mit Polyvinylidenchlorid beschichteter Polypropylenfilm, 25 μm stark (Torayfan GL45 der Toray Ind. Inc.)
e) Ungereckter Polyäthylenfilm, 30 μm stark. (Dieser wurde nach der T-Düsenmethode aus Sumikasen-L705 der Sumitomo Chemical Co. hergestellt.)

Die so erhaltenen Filme wurden jeweils der erfindungsgemässen Behandlung auf die gleiche Weise wie in Beispiel 1 unterzogen.

Die Ergebnisse der Beurteilung der so erhaltenen Filme sind in Tabelle 4 angegeben.

Tabelle 4

| Filmbezeichnung | Behandelter Film | Bedruck-barkeit | Krit. Oberflächen-benetzungsspannung (dyn/cm) | μmet |
|---|---|---|---|---|
| a | Polyesterfilm | 5 | 75 | 0,49 |
| b | Polyamidfilm | 5 | 72 | 0,52 |
| c | Äthylen/Propylenmischpolymerfilm | 5 | 70 | 0,51 |
| d | mit Polyvinylidenchlorid beschichteter Film* | 5 | 86 oder höher | 0,54 |
| e | Polyäthylenfilm | 5 | 73 | 0,55 |

* die beschichtete Seite wurde behandelt.

**Patentansprüche**

1. Verfahren zur Oberflächenbehandlung von Kunststoffen mittels einer Koronaentladung, dadurch gekennzeichnet, dass man die Koronaentladung in einer Gasatmosphäre durchführt, die durch ein Gasgemisch aus Stickstoff ($N_2$) und Kohlendioxyd ($CO_2$) gebildet wird, wobei das Volumenverhältnis von $N_2 : CO_2$ bei 99,5 : 0,5 bis 50 : 50 liegt und der Sauerstoffgehalt des Gasgemisches höchstens 0,1 Volumenprozent beträgt.

2. Verfahren nach Anspruch 1, dadurch gekennzeichnet, dass das Verhältnis $N_2 : CO_2$ bei 99,2 : 0,8 bis 80 : 20 liegt.

3. Verfahren nach einem der Ansprüche 1 oder 2, dadurch gekennzeichnet, dass der Sauerstoffgehalt unter 0,05 Volumenprozent liegt.

4. Verfahren nach einem der Ansprüche 1 bis 3, dadurch gekennzeichnet, dass man mit einer Spannung zwischen 2 und 30 kV arbeitet.

5. Verfahren nach einem der Ansprüche 1 bis 4, dadurch gekennzeichnet, dass man mit einer Frequenz zwischen 50 Hz und 500 kHz arbeitet.

6. Verfahren nache einem der Ansprüche 1 bis 5, dadurch gekennzeichnet, dass man mit einer Energie zwischen 500 und 30000 J/m² Objektfläche arbeitet.

7. Verfahren nach einem der Ansprüche 1 bis 6, dadurch gekennzeichnet, dass man Filme oberflächenbehandelt.

8. Verfahren nach Anspruch 7, dadurch gekennzeichnet, dass man gestreckte Filme behandelt.

9. Verfahren nach einem der Ansprüche 7 oder 8, dadurch gekennzeichnet, dass man beschichtete Filme behandelt.

10. Polymerfilm hergestellt nach einem der Ansprüche 7 bis 9, dadurch gekennzeichnet, dass er einen Reibungsbeiwert gegen Metall (μmet) von < 1,0 und eine kritische Oberflächenbenetzungsspannung von > 0,5 dyn/cm aufweist.

11. Film nach Anspruch 11, dadurch gekennzeichnet, dass er aus einem Polyolefin, Copolymeren hiervon, Polyester, Polyamid, Polyvinylchlorid oder Polyvinylidenchlorid besteht.

**Claims**

1. Process for the surface treatment of plastic materials by means of a corona discharge, characterized in that the corona discharge is carried out in a gaseous atmosphere comprising a gas mixture of nitrogen ($N_2$) and carbon dioxide ($CO_2$), wherein the volumetric proportions of $N_2 : CO_2$ vary between 99.5:0.5 and 50:50 and the maximum oxygen content of the gas mixture is 0.1% by volume.

2. Process as claimed in claim 1, wherein the ratio between $N_2$ and $CO_2$ varies between 99.2:0.8 and 80:20.

3. Process as claimed in one of claims 1 or 2, wherein the oxygen content is below 0.05% by volume.

4. Process as claimed in any of claims 1 to 3, wherein a voltage between 2 and 30 kV is applied.

5. Process as claimed in any of claims 1 to 4, wherein a frequency between 50 Hz and 500 kHz is used.

6. Process as claimed in any of claims 1 to 5, wherein an energy between 500 and 30,000 J/m² of the surface to be treated is supplied.

7. Process as claimed in any of claims 1 to 6, wherein films are subjected to a surface treatment.

8. Process as claimed in claim 7, wherein stretched films are treated.

9. Process as claimed in one of claims 7 or 8, wherein coated films are treated.

10. Polymer film produced as claimed in any of claims 7 to 9, which has a frictional force against metal ($\mu$met) of $< 1.0$ and a critical surface wetting tension of $> 0.5$ dyn/cm.

11. Film as claimed in claim 10, consisting of a polyolefin, of a copolymer thereof, of polyester, of polyamide, of polyvinyl chloride or of polyvinylidene chloride.

## Revendications

1. Procédé pour le traitement des surfaces de matières plastiques par effet corona, caractérisé en ce que l'effet corona est réalisé dans une atmosphère gazeuse constituée d'un mélange d'azote ($N_2$) et de bioxyde de carbone ($CO_2$) dont le rapport des volumes de $N_2/CO_2$ se situe entre 99,5/0,5 et 50/50, et en ce que la teneur en oxygène du mélange gazeux atteint au maximum 0,1% en volume.

2. Procédé selon la revendication 1, caractérisé en ce que le rapport de $N_2/CO_2$ se situe entre 99,2/0,8 et 80/20.

3. Procédé selon l'une des revendications 1 ou 2, caractérisé en ce que la teneur en oxygène est inférieure à 0,05% en volume.

4. Procédé selon l'une des revendications 1 à 3, caractérisé en ce qu'on travaille avec une tension entre 2 et 30 kV.

5. Procédé selon l'une des revendications 1 à 4, caractérisé en ce qu'on travaille avec une fréquence variant entre 50 Hz et 500 kHz.

6. Procédé selon l'une des revendications 1 à 5, caractérisé en ce qu'on travaille avec une énergie variant entre 500 et 30 000 J/m² de surface traitée.

7. Procédé selon l'une des revendications 1 à 6, caractérisé en ce qu'on procède au traitement superficiel des films.

8. Procédé selon la revendication 7, caractérisé en ce qu'on procède au traitement des films étirés.

9. Procédé selon l'une des revendications 7 ou 8, caractérisé en ce qu'on procède au traitement des films enduits.

10. Film en polymère réalisé selon l'une des revendications 7 à 9, caractérisé en ce qu'il présente un coefficient de frottement contre le métal ($\mu$met) $< 1,00$ et une tension superficielle critique due au mouillage $> 0,5$ dyn/cm.

11. Film selon la revendication 10, caractérisé en ce qu'il est réalisé à partir d'une polyoléfine, d'un copolymère de polyoléfine, d'un polyester, d'un polyamide, d'un chlorure de polyvinyle ou d'un chlorure de polyvinylidène.